# EUROPEAN PATENT APPLICATION

(11) **EP 2 541 557 A1**
(43) Date of publication of application: **02.01.2013**
(21) Application number: 10846571.7
(22) Date of filing: 24.08.2010
(51) Int. Cl.: G21C 9/016

(54) **MOLTEN MATERIAL COOLING STRUCTURE, REACTOR CONTAINMENT VESSEL PROVIDED WITH COOLING STRUCTURE, AND NUCLEAR POWER PLANT PROVIDED WITH CONTAINMENT VESSEL**

(30) Priority: 25.02.2010 JP 2010041088
(71) Applicant: Mitsubishi Heavy Industries, Ltd., Tokyo 108-8215 (JP)
(72) Inventor: KONDO, Yoshiyuki, Tokyo 108-8215 (JP); SUZUTA, Tadahiko, Tokyo 108-8215 (JP); YAMAGISHI, Makoto, Tokyo 108-8215 (JP); GODA, Hiroshi, Tokyo 108-8215 (JP); TANIMOTO, Koichi, Tokyo 108-8215 (JP)
(74) Representative: Intès, Didier Gérard André
(86) International application number: PCT/JP2010/064233
(87) International publication number: WO 2011/104908

(57) **Abstract**

An object is to provide a corium cooling structure that is capable of accumulating corium and debris that have flowed out from a reactor in small divided portions and of sufficiently cooling the high-temperature corium and debris, a reactor containment vessel provided with the same, and a nuclear power plant provided with the same. A capture portion (62) that captures the corium that has flowed out from a reactor (12) and a plurality of pipe portions (63) that are provided in a coolant storing portion (56) and into which the corium flows via the capture portion (62) are provided.

## Description

### Technical Field

The present invention relates to a corium cooling structure, a reactor containment vessel provided with the same, and a nuclear power plant provided with the same, and, in particular, relates to cooling of corium that has flowed out from a reactor.

### {Background Art}

Generally in a pressurized water reactor (PWR: Pressurized Water Reactor), a reactor core inside a reactor vessel is cooled by an emergency reactor-core cooling apparatus, which is activated when a loss-of-coolant accident (LOCA: Loss of Coolant Accident) or a transient phenomenon (transient) occurs. However, in the event of failure of the emergency reactor-core cooling apparatus, the reactor core cannot be cooled, causing the reactor core to melt down, and thus, the reactor vessel is destroyed by corium, such as melted fuel, etc. The corium that has destroyed the reactor vessel penetrates a bottom portion of the reactor vessel, drops into a cavity in which coolant is stored, and is cooled therein (for example, Patent Literature 1).

### Citation List

### Patent Literature

{PTL 1} Publication of Japanese Patent, No. 3537444.

### {Summary of Invention}

### {Technical Problem}

However, with the invention disclosed in Patent Literature 1, when the corium and/or the debris accumulate in a pile, the corium cannot be cooled sufficiently, and there is a risk of the corium reestablishing a self-sustaining nuclear chain reaction.

The present invention has been conceived in light of the above-described circumstances, and an object thereof is to provide a corium cooling structure in which sufficient cooling is made possible by causing corium that has flowed out from a reactor to accumulate in small divided portions, a reactor containment vessel provide with the same, and a nuclear power plant provided with the same.

### Solution to Problem

In order to solve the above-described problems, a corium cooling structure of the present invention, a reactor containment vessel provided with the same, and a nuclear power plant provided with the same employ the following solutions.
Specifically, a corium cooling structure according to a first aspect of the present invention is provided with a capture portion that captures corium that has flowed out from a reactor; and a plurality of pipe portions that are provided in a coolant storing portion, in which coolant is stored, and into which the corium flows via the capture portion.

In this way, the corium cooling structure according to the first aspect of the present invention is provided with the capture portion and the plurality of the pipe portions into which the corium that has flowed out from the reactor flows via the capture portion. In addition, the plurality of the pipe portions are provided inside the coolant storing portion. Because of this, the corium can be dispersed into a plurality of small divided portions to be accumulated in the pipe portions. Therefore, the corium that has flowed out can be prevented from accumulating in a pile.
In addition, a contact area between the corium that has flowed into the pipe portions in the small divided portions and the coolant in the coolant storing portion can be increased by means of the pipe portions. Therefore, the cooling efficiency of the corium that has flowed out from the reactor can be enhanced.

In the corium cooling structure according the first aspect of the present invention, it is preferable that outer pipes into which the coolant is introduced, between the pipe portions and the outer pipes, be provided at outer circumferences of the plurality of pipe portions.

In this case, because the outer pipes, where the coolant is introduced, are provided at the outer circumferences of the pipe portions, when the high-temperature corium flows into the pipe portions, the coolant between the pipe portions and the outer pipes is heated to cause convection of the coolant (chimney effect). Accordingly, the coolant between the pipe portions and the outer pipes naturally circulates, and it is possible to promote the cooling of the corium in the pipe portions. Therefore, the cooling efficiency can be enhanced for the corium that has flowed out from the reactor.

In the above-described corium cooling structure, it is preferable that the capture portion be an inclined plate that slopes toward the coolant storing portion.

In this case, because the inclined plate that slopes toward the coolant storing portion is employed as the capture portion, the corium that has flowed out can easily be made to flow along the slope to the individual pipe portions. Therefore, the corium that has flowed out from the reactor can be cooled rapidly.

In the above-described corium cooling structure, it is preferable that the inclined plate have the plurality of pipe portions at a start-point side of the slope, and a step-shaped portion be provided at an end-point side of the slope within the coolant storing portion.

In this case, because the plurality of the pipe portions to which the corium is guided are provided at the start-point side of the slope of the inclined plate and because the end-point side of the slope of the inclined plate formed in the step shape is provided in the cooling maintaining portion, the corium that cannot be made to flow into the pipe portions can be guided to the end-point side of the slope of the inclined plate, and the guided corium can be brought into contact with the coolant by spreading it with the step shape. Accordingly, the corium that cannot be made to flow into the pipe portions can be cooled. In addition, by forming the end-point side of the slope of the inclined plate in the step shape, the contact area between the corium and the coolant can be increased, and the cooling efficiency can be enhanced. Therefore, even in the case in which such a large amount of corium that cannot be cooled by the pipe portions has flowed out from the reactor, the corium can be cooled suitably.

In the above-described corium cooling structure, it is preferable that a penetrating-space into which coolant can flow be provided between steps that form the step-shaped portion.

In this case, because the step shape at the end-point side of the slope of the inclined plate has the penetrating-space between the steps, into which the coolant can flow, the coolant that has flowed into the penetrating-space between the steps and the corium that has spread out at the step shape in the inclined plate can be brought into contact. Therefore, I the cooling efficiency can be further enhanced for the corium that has spread at the step shape.

In addition, steam from the coolant evaporated due to the heat given to the coolant by the high-temperature corium that has flowed into the pipe portions flows into the penetrating-space between the steps. Accordingly, the steam from the coolant that has flowed into the penetrating-space acts on the corium that flows at the step shape in the inclined plate so as to thinly spread it. Accordingly, the contact area between the corium and the coolant can be increased. Therefore, the corium guided to the step shape can be spread out even more.

In the corium cooling structure according to the first aspect of the present invention, it is preferable that the plurality of the pipe portions be provided over the entire region of the capture portion.

In this case, because the pipe portions are provided over the entire region of the capture portion, the corium can be cooled while preventing the corium from coming into direct contact with the coolant. Therefore, it is possible to prevent an explosion caused by the corium that has flowed out from the reactor coming into contact with the coolant.

Furthermore, in the corium cooling structure according to the first aspect of the present invention, it is preferable that the capture portion be provided below the reactor and be disposed so as to form a predetermined space with respect to a bottom portion of the reactor.

In this case, because the bottom portion of the reactor and the capture portion provided below the reactor are disposed with the predetermined gap provided therebetween, even in the case in which a crack (hinge-like crack) forms at a connecting portion that connects the reactor main unit and the bottom portion of the reactor and the bottom portion of the reactor falls down, the bottom portion of the reactor that has fallen down can be supported with the capture portion. Therefore, it is possible to prevent the bottom portion of the reactor from fully opening downward due to the hinge-like crack.
Note that the predetermined space refers to a distance at which the bottom portion of the reactor can be supported with the capture portion when it falls down.

In addition, in a reactor containment vessel according to the first aspect of the present invention, it is preferable that any one of corium cooling structures described above, a reactor having a reactor core at the interior thereof, and a coolant storing portion that holds coolant be provided in the interior thereof.

In this case, because the corium cooling structure is employed, with which it is possible to disperse the corium that has flowed out from the reactor into small divided portions and cool them without forming a large pile, the corium that has flowed out can be quickly cooled even in the case in which the reactor core melts down at the time of emergency and the corium flows out. Therefore, the corium can be prevented from reestablishing a self-sustaining nuclear chain reaction, and the safety of the reactor containment vessel can be ensured.

A nuclear power plant according to a second aspect of the present invention is provided with the reactor containment vessel described above.

As described above, in the nuclear power plant according to the second aspect of the present invention, because the reactor containment vessel whose safety can be ensured even in the event of meltdown of the reactor core, causing the corium to flow out from the reactor, is employed, the safety of the nuclear power plant can be enhanced.

### {Advantageous Effects of Invention}

The corium cooling structure is provided with a capture portion and a plurality of pipe portions into which corium that has flowed out from a reactor flows via the capture portion. In addition, the plurality of pipe portions are provided inside a coolant storing portion. Because of this, the corium can be dispersed into a plurality of small divided portions to be accumulated in the pipe portions. Therefore, the corium that has flowed out can be prevented from accumulating in a pile.
In addition, contact areas between the small divided portions of corium that has flowed into the pipe portions and coolant in the coolant storing portion can be increased by means of the pipe portions. Therefore, the cooling efficiency can be enhanced for the corium that has flowed out from the reactor.

### Brief Description of Drawings

Fig. 1 is a configuration diagram, in outline, of a reactor containment vessel of a nuclear power plant having a corium cooling structure according to a first embodiment of the present invention.
Fig. 2 is a configuration diagram, in outline, of the corium cooling structure shown in Fig. 1.
Fig. 3 is an enlarged view of pipe portions shown in Fig. 2.
Fig. 4 is a configuration diagram, in outline, of a corium cooling structure according to a second embodiment of the present invention.

### {Description of Embodiments}

### First Embodiment

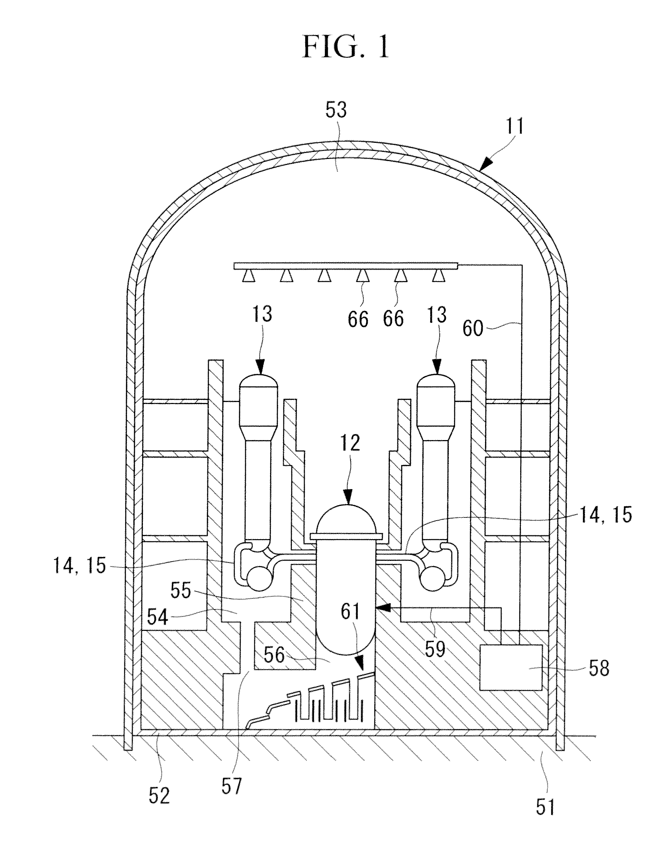

Fig. 1 shows, in outline, a configuration diagram of a reactor containment vessel of a nuclear power plant having a corium cooling structure according to a first embodiment of the present invention.
A reactor containment vessel 11 of a nuclear plant (not shown) accommodates a pressurized water reactor (reactor) 12 and steam generators 13, and the pressurized water reactor 12 and the steam generators 13 are connected via cooling-fluid pipes 14 and 15. The cooling-fluid pipes 14 are provided with pressurizes (not shown), and the cooling-fluid pipes 15 are provided with cooling-fluid pumps (not shown).

Light water is used as a moderator and as primary cooling fluid, and, in order to suppress boiling of the primary cooling fluid in the reactor core of the pressurized water reactor 12, the primary cooling fluid system is controlled by the pressurizer so that a high-pressure state of about 160 atm is maintained. Accordingly, the light water, serving as the primary cooling fluid, is heated at the pressurized water reactor 12 which uses slightly-enriched uranium or MOX as fuel and is sent to the steam generators 13 through the cooling fluid pipes 14 while the high-temperature primary cooling fluid is maintained at the predetermined high pressure with the pressurizer. Heat exchange is performed at the steam generators 13 between the high-pressure, high-temperature primary cooling fluid and secondary cooling fluid. The primary cooling fluid cooled by the heat exchange is returned to the pressurized water reactor 12 through the cooling fluid pipes 15.

An external cooling fluid pipe (not shown) is connected to the steam generators 13 from the exterior of the reactor containment vessel 11. The external cooling fluid pipe connects the steam generators 13 of the reactor containment vessel 11 with, for example, a turbine (not shown) and a condenser (not shown). Vapor generated at the steam generators 13 through the heat exchange with the high-pressure, high-temperature primary cooling fluid is sent to the turbine and the condenser through the external cooling fluid pipe.

The reactor containment vessel 11 is erected on solid ground 51, such as base rock or the like, with a steel liner 52 placed therebetween, which forms a pressure boundary with the exterior. The reactor containment vessel 11 is internally provided with a plurality of compartments, for example, an upper compartment 53 and a steam-generator loop chamber 54, which are formed of steel-reinforced concrete, etc. A center portion in the reactor containment vessel 11 is provided with a cylindrical concrete structure 55 that forms the steam-generator loop chamber 54. The pressurized water reactor 12 is suspended in the concrete structure 55 to be supported thereat. The steam-generator loop chamber 54 is provided with the steam generators 13. The pressurized water reactor 12 and the steam generators 13 are connected with the cooling fluid pipes 14 and 15.

A cavity (coolant storing portion) 56 is provided in the reactor containment vessel 11 at a position below a reactor vessel 31 by means of the concrete structure 55. The cavity 56 communicates with the steam-generator loop chamber 54 via a drain line 57. In addition, a fuel-exchange pit 58 is provided in the reactor containment vessel 11. Cooling fluid (coolant) is stored inside the fuel-exchange pit 58.

The fuel-exchange pit 58 is provided with a cooling-fluid supply pathway (not shown) for supplying the pressurized water reactor 12 and the reactor containment vessel 11 with the cooling fluid stored therein in the event of an emergency. The cooling-fluid supply pathway has a reactor cooling pathway 59 and a reactor-containment-vessel cooling pathway 60. The reactor cooling pathway 59 guides the cooling fluid to be supplied to the pressurized water reactor 12. The reactor-containment-vessel cooling pathway 60 guides the cooling fluid to be sprayed in the reactor containment vessel 11. The cooling fluid that has been sprayed in the reactor containment vessel 11 is stored in the cavity 56 from the steam-generator loop chamber 54 via the drain line 57.

The reactor containment vessel 11 is provided with an external injection pathway (not shown) for supplying the cooling fluid, which is fire-extinguishing fluid, or the like, to the cavity 56. The external injection pathway is connected to external supply equipment (not shown) that is provided outside the reactor containment vessel 11 and that supplies the fire-extinguishing fluid, or the like.

The cavity 56 that stores the cooling fluid is provided in the reactor containment vessel 11 below the pressurized water reactor 12. The cavity 56 is provided with a core catcher (corium cooling structure) 61 that, in the event of an emergency, receives melted metal (corium) that has dropped from the pressurized water reactor 12 and that promotes the cooling thereof with the cooling fluid.

The cavity 56 is formed below the pressurized water reactor 12 by means of the concrete structure 55. The cavity 56 extends horizontally at one side from below the pressurized water reactor 12. A basal end of the cavity 56 is positioned below the pressurized water reactor 12, and the top portion at the distal end side thereof communicates with the steam-generators loop chamber 54 via the drain line 57. The core catcher 61 is provided on the upper side of the steel liner 52 .

The core catcher 61 receives the melted metal that has flowed out from the pressurized water reactor 12 and also causes the melted metal to widely spread out to increase the contact area with the cooling fluid, thereby promoting the cooling of the melted metal by the cooling fluid.

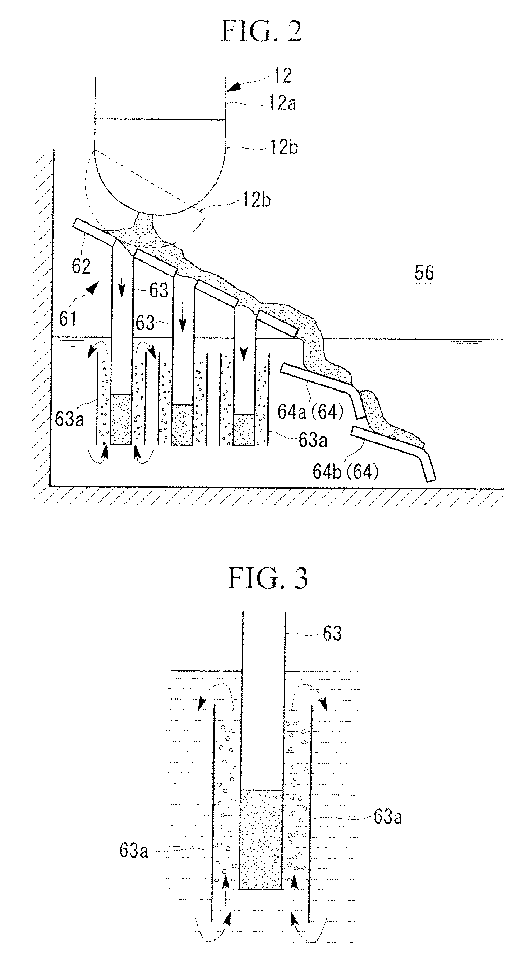

Fig. 2 shows, in outline, a configuration diagram of the core catcher.
The core catcher 61 is provided with an inclined plate (capture portion) 62 on which the melted metal flows, a plurality of pipe portions 63, and a step-shaped portion (step shape) 64.

The inclined plate 62 is disposed so as to slope downward in the cavity 56 in a direction extending horizontally (at the distal end side of the cavity 56) from below the pressurized water reactor 12 (basal end of the cavity 56). The basal end side (start-point side of the slope) of the inclined plate 62 is provided with a plurality of pipe portions 63 that extent toward protective concrete (not shown) provided on a top surface of the steel liner 52. The step-shaped portion 64 is formed at a distal end side (end-point side of the slope) of the inclined plate 62. The inclined plate 62 and the step-shaped portion 64 are supported on the top surface of the steel liner 52 (see Fig. 1) so as to be in an inclined state.

The step-shaped portion 64 is formed by a plurality of steps (Fig. 2 shows two steps) 64a and 64b. A space is formed between the distal end side of the continuous slope of the inclined plate 62 and the step 64a, where vapor from the cooling fluid evaporated by the heat of the melted metal that has flowed into the individual pipe portions 63 and the cooling fluid in the cavity 56 can flow. If addition, a space is formed between the steps 64a and 64b, through which the cooling fluid in the cavity 56 can pass.

The pressurized water reactor 12 includes a reactor vessel main unit 12a, a reactor vessel lid (not shown) to be mounted at the top portion thereof, and a reactor-vessel-main-unit bottom portion 12b connected to the reactor vessel main unit 12a from below by means of wielding, so that a reactor internal structure (not shown) can be inserted into the interior thereof. The reactor vessel lid can be opened/closed with respect to the reactor vessel main unit 12a. The reactor vessel main unit 12a has a cylindrical shape in which the top portion thereof is open and the bottom portion thereof is closed by connecting the reactor-vessel-main-unit bottom portion 12b thereto. An inlet nozzle (not shown) and an outlet nozzle (not shown) for supplying/discharging the cooling fluid guided from the reactor cooling pathway 59 (see Fig. 1) are formed at the top portion of the pressurized water reactor 12.

Fig. 3 shows an enlarged view of the pipe portions shown in Fig. 2.
The pipe portions 63 have pipe shapes that extend downward from the inclined plate 62 (see Fig. 1). End portions of the pipe portions. 63 on a side connected to the inclined plate 62 open at the inclined plate 62. Accordingly, the melted metal that spreads out on the inclined plate 62 can flow into the pipe portions 63. On the other hand, bottom end portions to which the pipe portions 63 extend are closed so that the melted metal can be accumulated inside the pipe portions 63.

The individual pipe portions 63 are submerged in the cooling fluid stored in the cavity 56 (see Fig. 2). The pipe portions 63 have double-tube structures in which ring-shaped outer pipes 63a are provided at outer circumferential portions thereof. Because the pipe portions 63 have the double-tube structures, a chimney effect can be generated, whereby the cooling fluid whose temperature has been increased by the melted metal that has flowed into the pipe portions 63 and the low-temperature cooling fluid in the cavity 56 exhibit natural convection between the pipe portions 63 and the outer pipes 63a.

Next, a normal flow of the cooling fluid in the event of a loss-of-coolant accident (LOCA) will be described.
In the event of a loss-of-coolant accident (LOCA) or the like, an emergency reactor-core cooling apparatus (not shown) is activated and drives a pump (not shown), thus supplying the cooling fluid to the cooling-fluid supply pathway. Specifically, the cooling fluid stored in the fuel exchange pit 58 is supplied to the reactor-containment-vessel cooling pathway 60. The cooling fluid supplied to the reactor-containment-vessel cooling pathway 60 is sprayed toward the pressurized water reactor 12 from numerous spray nozzles 66. Thus, the cooling fluid is sprayed into a large amount of steam generated inside the reactor containment vessel 11.

The interior of the reactor containment vessel 11 is cooled by the latent heat of the cooling fluid sprayed in the reactor containment vessel 11. The cooling fluid that has cooled the interior of the reactor containment vessel 11 falls inside the reactor containment vessel 11 at high temperature. The cooling fluid that has fallen inside the reactor containment vessel 11 is stored in the steam-generator loop chamber 54. A portion of the cooling fluid stored in the steam-generator loop chamber 54 passes through the drain line 57 and is stored in the cavity 56.

In addition, by driving the above-described pump, the cooling fluid stored in the fuel exchange pit 58 is sent to the pressurized water reactor 12 via the reactor cooling pathway 59. The cooling fluid guided to the pressurized water reactor 12 cools the decay heat generated at the reactor core in the pressurized water reactor 12. A portion of the cooling fluid that has cooled the decay heat turns into steam and is released into the reactor containment vessel 11. In addition, the remainder thereof turns into high-temperature water, passes through the drain line 57 from the steam-generator loop chamber 54, and is stored in the cavity 56.

Next, the flow of the cooling fluid in the event of failure of the emergency reactor-core cooling apparatus will be described.
In the event of failure of the emergency reactor-core cooling apparatus, the pressurized water reactor 12 cannot be cooled by guiding the cooling fluid to the pressurized water reactor 12. Because of this, the reactor core in the pressurized water reactor 12 melts down. Meltdown of the reactor core generates the melted metal. The generated high-temperature melted metal accumulates in the reactor-vessel-main-unit bottom portion (bottom portion of the reactor) 12b connected below the reactor vessel main unit 12a.

When the high-temperature melted metal accumulates in the reactor-vessel-main-unit bottom portion 12b, a crack, etc. occurs in a welded portion (connection portion) that connects the reactor vessel main unit 12a and the reactor-vessel-main-unit bottom portion 12b. When the crack formed in the welded portion weld grows, a hinge-like crack forms at the reactor-vessel-main-unit bottom portion 12b with respect the reactor vessel main unit 12a.

When the hinge-like crack forms at the reactor-vessel-main-unit bottom portion 12b, a portion of the reactor-vessel-main-unit bottom portion 12b falls down from the reactor vessel main unit 12a. When the portion of the reactor-vessel-main-unit bottom portion 12 falls down, the melted metal accumulated in the reactor-vessel-main-unit bottom portion 12b flows out from the pressurized water reactor 12.

On the other hand, the inclined plate 62 is disposed below the pressurized water reactor 12, with a predetermined space on the basal end side thereof. Accordingly, the reactor-vessel-main-unit bottom portion 12b, a portion of which has fallen down, is supported from below by the basal end side of the inclined plate 62. Witch the inclined plate 62 supporting the reactor-vessel-main-unit bottom portion 12b from below, the reactor-vessel-main-unit bottom portion 12b is presented from fully opening up by a large amount below the reactor vessel 12.
Note that the predetermined space refers to a distance at which the inclined plate 62 can support the reactor-vessel-main-unit bottom portion 12b from below when a portion thereof falls down from the reactor main unit 12a.

The melted metal that has flowed out from the pressurized water reactor 12 drops onto the top surface of the inclined plate 62 at the basal end side thereof. While dropping, a portion of the melted metal forms debris in the form of fine grains. The melted metal containing the debris forms a debris bed on the inclined plate 62. Because of the slope of the inclined plate 62, the debris bed spreads out on the top surface of the inclined plate 62 while moving from the basal end side to the distal end side thereof. The melted metal that spreads and moves along the slope of the inclined plate 62 flows into the plurality of pipe portions 63 provided in the inclined plate 62.

The melted metal that has flowed into the pipe portions 63 accumulates at the bottom of the pipe portions 63. The individual pipe portions 63 are submerged in the cooling fluid in the cavity 56. Accordingly, the high-temperature melted metal that has flowed into the pipe portions 63 is cooled by the cooling fluid via the pipe portions 63. A portion of the cooling fluid that has cooled the high-temperature melted metal turns into vapor and is guided to the step-shaped portion 64 at the inclined plate 62.

Here, because the pipe portions 63 into which the melted metal flows are formed with the double-tube structures, the cooling fluid between the pipe portions 63 and the outer pipes 63a exhibits natural convection due to the chimney effect when the high-temperature melted metal flows into the pipe portions 63. Due to the natural convection of the cooling fluid between the pipe portions 63 and the outer pipes 63a, the cooling effect on the melted metal that has flowed into the pipe portions 63 is increased via the pipe portions 63.

The melted metal that is not captured by the plurality of pipe portions 63 provided in the inclined plate 62 moves to the step-shaped portion 64 provide at the distal end side of the continuous slope of the inclined plate 62. The above-described vapor of the cooling fluid flows in the penetrating-space formed between the distal end of the inclined plate 62 and the step 64a of the step-shaped portion 64.

Because of this, when passing between the distal end side of the continuous slope of the inclined plate 62 and the step 64a of the step-shaped portion 64, the melted metal that has moved to the step-shaped portion 64 is blown by the vapor flowing thereat. As a result of being blown by the vapor, the melted metal moves on the step-shaped portion 64 while spreading.

In addition, the cooling fluid in the cavity 56 flows through the penetrating-space. Because of this, when moving between the distal end side of the continuous slope of the inclined plate 62 and the step 64a of the step-shaped portion 64 and between the step 64a and the step 64b, the melted metal comes in contact with the cooling fluid, and thus, cooling thereof is promoted.

As described above, the corium cooling structure according this embodiment, the reactor containment vessel provided with the same, and the nuclear power plant provided with the same afford the following effects and advantages.
The core catcher (corium cooling structure) 61 is provided with the inclined plate (capture portion) 62 and the plurality of pipe portions 63 into which the melted metal (corium) that has flowed out from the pressurized water reactor 12 (reactor) flows via the inclined plate 62. In addition, the plurality of pipe portions 63 are provided inside the cavity (coolant storing portion) 56 where the cooling fluid (coolant) is stored. Because of this, the melted metal containing the debris can be dispersed into a plurality of small divided portions to be accumulated in the pipe portions 63, and thus, the melted metal does not accumulate in a pile at the core catcher 61.

In addition, the contact area between the small divided portions of the melted metal that has flowed into the pipe portions 63 and the cooling fluid in the cavity 56 can be increased by means of the pipe portions 63. Therefore, the cooling efficiency can be enhanced for the melted metal that has flowed out from the pressurized water reactor 12.

The outer pipes 63a to which the cooling fluid is introduced are provided at the outer circumferences of the pipe portions 63. By doing so, when the high-temperature melted metal is introduced to inside the pipe portions 63, the cooling fluid between the pipe portions 63 and the outer pipes 63a is heated, and convection of the cooling fluid occurs (chimney effect). Accordingly, the cooling fluid between the pipe portions 63 and the outer pipes 63a naturally circulates, and thus, it is possible to promote cooling of the melted metal in the pipe portions 63. Therefore, the cooling efficiency can be enhanced for the melted metal that has flowed out from the pressurized water reactor 12.

The inclined plate 62 that slopes toward the cooling fluid stored in the cavity 56 is employed as the capture portion. Because of this, the melted metal that has flowed out can easily be made to flow along the slope to the individual pipe portions 63. Therefore, it is possible to promote cooling of the melted metal that has flowed out from the pressurized water reactor 12, and cooling thereof can be achieved rapidly.

The melted metal is guided from the basal end side (start-point side of the slope) of the inclined plate 62 to the plurality of pipe portions 63, and the step-shaped portion 64 is formed at the distal end side (end-point side of the slope) of the inclined plate 62 and is provided in the cavity 56. By doing so, the melted metal that cannot be made to flow into the pipe portions 63 can be guided to the distal end side of the inclined plate 62, and the melted metal guided thereto can be spread out with the step-shaped portion 64, thus causing it to come in contact with the cooling fluid. Because of this, the contact area between the melted metal that cannot be made to flow into the pipe portions 63 and the cooling fluid can be increased, and the cooling efficiency can be enhanced. Therefore, even in the case in which such a large amount of melted metal that cannot be cooled with the pipe portions 63 has flowed out from the pressurized water reactor 12, the melted metal can be cooled suitably.

The step-shaped portion 64 of the inclined plate 62 has the penetrating spaces between the distal end side of the continuous slope of the inclined plate 62 and the step 64a and between the step 64a and the step 64b. By doing so, the cooling fluid that flows into the penetrating spaces and the melted metal that is spread out at the step-shaped portion 64 of the inclined plate 16 can be brought into contact. Therefore, the cooling efficiency can be enhanced further for the melted metal that is spread out at the step-shaped portion 64.

In addition, vapor (coolant steam) from evaporation due to the heat given to the cooling fluid by the high-temperature melted metal that has flowed into the pipe portions 63 flows into the penetrating-space between the distal end side of the continuous slope of the inclined plate 62 and the step 64a. Accordingly, the vapor that has flowed into the penetrating-space acts on the melted metal that flows at the step-shaped portion 64 of the inclined plate 62 so as to thinly spread it. Because of this, the contact area between the melted metal and the cooling fluid can be increased. Therefore, the melted metal guided to the step-shaped portion 64 can be spread out even more.

The reactor-vessel-main-unit bottom portion 12b and the inclined plate 62 in the core catcher 61 provided below the pressurized water reactor 12 are disposed with the predetermined gap provided therebetween. Because of this, even in the case in which a hinge-like crack forms at the weld (connecting portion) that connects the reactor-vessel main unit 12a and the reactor-vessel-main-unit bottom portion 12b and a portion of the reactor-vessel-main-unit bottom portion 12b falls down, the reactor-vessel-main-unit bottom portion 12b, a portion of which has fallen down, can be supported by the inclined plate 62. Therefore, it is possible to prevent the reactor-vessel-main-unit bottom portion 12b from fully opening downward due the hinge-like crack.

The core catcher 61 is employed, with which it is possible to disperse and cool the melted metal that has flowed out from the pressurized water reactor 12 without forming a large pile. Because of this, even in the case in which the reactor core of the pressurized water reactor 12 melts down in the event of an emergency and the melted metal flows out from the pressurized water reactor 12, the melted metal that has flowed out can be quickly cooled. Therefore, the melted metal can be prevented from reestablishing a self-sustaining nuclear chain reaction, and the safety of the reactor containment vessel 11 can be ensured.

Because the reactor containment vessel 11 whose safety thereof can be ensured even in the event of meltdown of the reactor core of the pressurized water reactor 12, causing the melted metal to flow out from the pressurized water reactor 12, is employed, the safety of the nuclear power plant can be enhanced.

Note that this embodiment is not limited thereto, and the inclined plate 62 may be formed of a porous material. By doing so, it is possible to make the cooling fluid supplied to the cavity 56 flow vertically by passing through the inclined plate 62, and the cooling efficiency is enhanced for the melted metal that flows on the inclined plate 62. Also applicable as the porous material to be employed in the inclined plate 62 are for example, nonwoven-fabric sintered materials in which austenitic stainless steel, superalloys based on Ni, Co, etc., are used as raw materials in addition to ceramic materials, such as alumina, etc.; porous metal materials, such as sintered materials sintered from metal particles and metal powder; porous metal materials having a structure in which metal meshes are overlaid; and porous metal materials having honeycomb structures. In addition, a porous plate formed by providing numerous holes in carbon steel or stainless steel can also be employed.

Furthermore, the step-shaped portion 64 in the inclined plate 62 may be formed of a porous material (or a porous plate). By doing so, it is possible to make the cooling fluid supplied to the cavity 56 flow vertically by passing through the inclined plate 62, and the heat of the melted metal can be removed from a top surface and a bottom surface thereof.

### Second Embodiment

A second embodiment of the present invention will be described below. A corium cooling structure of this embodiment and a reactor containment vessel provided with the same differ from those in the first embodiment in that the pipe portions are provided in the entire region of the inclined plate; however, other components are similar. Therefore, with regard to the same configuration and the same flow, the same reference signs are assigned and descriptions thereof will be omitted.

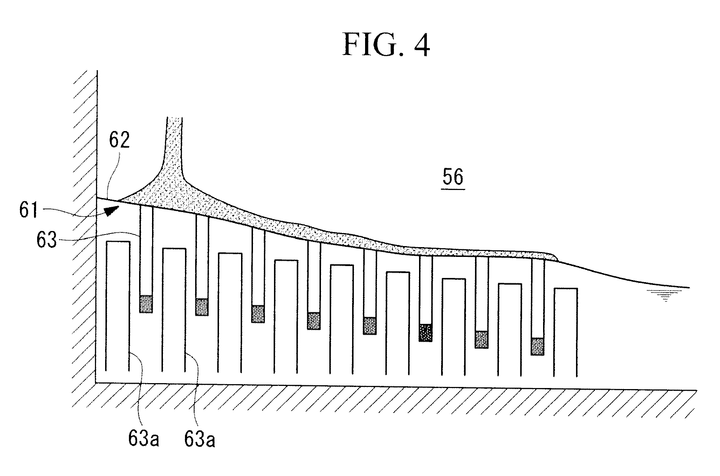

Fig. 4 shows, in outline, a configuration diagram of a corium cooling structure according to the second embodiment of the present invention.
The plurality of pipe portions 63 are provided in the entire region of the inclined plate (capture portion) 62 in the core catcher (corium cooling structure) 61. The distal end side (start-point side of the slope) of the inclined plate 62 is submerged in the cooling fluid (coolant) stored in the cavity (cooling maintaining portion) 56.

As described above, the corium cooling structure according to this embodiment, the reactor containment vessel provided with the same, and the nuclear plant provided with the same afford the following effects and advantages.
The pipe portions 63 are provided over the entire region of the inclined plate (capture portion) 62. Because of this, the melted metal can be cooled while preventing the melted metal (corium) from coming in direct contact with the cooling fluid (coolant). Therefore, it is possible to prevent an explosion caused by having the melted metal that has flowed out from the pressurized water reactor (reactor) come in contact with the cooling fluid.

### Reference Signs List

11 reactor containment vessel
12 pressurized water reactor (reactor)
56 cavity (coolant storing portion)
61 core catcher (corium cooling structure)
62 inclined plate (capture portion)
63 pipe portions

## Claims

1. A corium cooling structure comprising:
a capture portion that captures corium that has flowed out from a reactor; and
a plurality of pipe portions that are provided in a coolant storing portion, in which coolant is stored, and into which the corium flows via the capture portion.

2. A corium cooling structure according to Claim 1, wherein outer pipes into which the coolant is introduced, between the pipe portions and the outer pipes, are provided at outer circumferences of the plurality of pipe portions.

3. A corium cooling structure according to Claim 1 or 2, wherein the capture portion is an inclined plate that slopes toward the coolant storing portion.

4. A corium cooling structure according to Claim 3, wherein the inclined plate has the plurality of pipe portions at a start-point side of the slope, and a step-shaped portion is provided at an end-point side of the slope within the coolant storing portion.

5. A corium cooling structure according to Claim 4, wherein a penetrating space into which coolant can flow is provided between steps that form the step-shaped portion.

6. A corium cooling structure according to any one of Claims 1 to 3, wherein the plurality of the pipe portions are provided over the entire region of the capture portion.

7. A corium cooling structure according to any one of Claims 1 to 6, wherein the capture portion is provided below the reactor and is disposed so as to form a predetermined space with respect to a bottom portion of the reactor.

8. A reactor containment vessel comprising in the interior thereof:
a corium cooling structure according to any one of Claims 1 to 7;
a reactor having a reactor core at the interior thereof; and
a coolant storing portion that holds coolant.

9. A nuclear power plant provided with the reactor containment vessel according to Claim 8.
